# FASCICULE DE BREVET EUROPEEN

(11) **EP 1 776 907 B1**
(45) Date de publication et mention de la délivrance du brevet: **11.06.2008**
(21) Numéro de dépôt: 06356125.2
(22) Date de dépôt: 19.10.2006
(51) Int. Cl.: A47J 42/44, A47J 42/40

(54) **Moulin à café comprenant des moyens de détection du niveau de café broyé**
Kaffeemühle mit Mitteln zur Füllstanddetektion des gemahlenen Kaffees
Coffee mill with means to detect the level of the ground coffee

(30) Priorité: 20.10.2005 FR 0510711
(43) Date de publication de la demande: 25.04.2007
(73) Titulaire: SANTOS, 69120 Vaulx en Velin (FR)
(72) Inventeur: Fouquet, Nicolas, 69003 Lyon (FR)
(74) Mandataire: Myon, Gérard Jean-Pierre

(56) Documents cités:
- EP-A- 0 504 539
- DE-A1- 4 333 043
- ES-A6- 2 006 182

## Description

La présente invention concerne un moulin à café comprenant des moyens de détection du niveau de café broyé.

De façon classique, un tel moulin à café est généralement utilisé pour la préparation du café dit « Expresso », comme par exemple dans le dispositif commercialisé par la Demanderesse sous la référence « N° 40A ». Ce moulin à café comprend une réserve de café non broyé, qui peut être traité par des meules de broyage. Le café ainsi broyé se trouve délivré dans un doseur de café, ou il est stocké en vue de sa distribution.

Ce doseur comprend des moyens propres à détecter le niveau de café broyé dans son volume intérieur, lesquels moyens commandent le broyage du café. Ce doseur comprend en outre, le cas échéant, un organe de soutirage d'une dose de café broyé, associé à un tasseur, ainsi qu'un compteur permettant d'identifier le nombre de doses distribuées. A titre de variante, l'utilisateur peut procéder à un soutirage manuel, directement à partir du volume intérieur du doseur.

La présente invention vise plus spécifiquement les moyens précités, permettant de détecter le niveau de café broyé. A cet égard, on rappellera que le dosage volumétrique implique que le café broyé soit laissé à l'état de poudre la plus homogène possible dans le doseur. Ce café broyé ne doit en particulier pas subir de tassage dans le doseur, qui entraînerait une irrégularité dans le grammage des doses distribuées, du fait d'une variation de la masse volumique de ce café.

On connaît des moulins à café électriques, pour lesquels l'étape de broyage du café est conduite manuellement par l'opérateur. Ce dernier actionne un interrupteur en vue d'initier le broyage, lorsque le doseur est vide, puis appuie à nouveau sur cet interrupteur afin de stopper le broyage, lorsque le café broyé atteint un niveau suffisant dans le doseur.

D'autres moulins à café, tels que celui « N° 40A » précité, font appel à des moyens automatiques de détection du niveau de café, qui actionnent les moyens de broyage sans intervention de l'opérateur. A cet effet, un interrupteur électrique, qui est logé au-dessous du couvercle du doseur, se trouve relié par des fils aux organes de broyage.

Par ailleurs, il est prévu un organe mobile permettant l'activation de cet interrupteur, réalisé sous forme d'un balancier pivotant, dont la position varie en fonction du niveau de café dans le doseur. Ainsi, lorsque ce niveau est inférieur à une valeur prédéfinie, le balancier rentre en contact mécanique avec l'interrupteur, ce qui initie le broyage. Puis, lorsque le café broyé atteint un niveau suffisant dans le doseur, le balancier s'écarte de l'interrupteur, ce qui interrompt le broyage.

Un tel moulin à café est décrit dans le document ES-A-2006182.

Cette solution connue présente cependant certains inconvénients.

En effet, le démontage éventuel du doseur nécessite une intervention électrique au niveau des fils qui alimentent l'interrupteur. Ceci est particulièrement gênant, dans la mesure où le doseur constitue la principale source de panne d'un moulin à café. Ainsi, ce doseur est notamment susceptible de se dérégler, en particulier s'il est encrassé, ce qui implique de le démonter et de le nettoyer entièrement. Du fait de la présence des fils évoqués ci-dessus, cette manipulation s'avère risquée pour l'opérateur, de sorte qu'il est nécessaire de faire appel à du personnel extérieur qualifié.

En outre, la présence de l'interrupteur se révèle gênante en vue de l'accès au doseur proprement dit. Ceci est préjudiciable à la bonne utilisation du moulin à café, dans la mesure où les professionnels sont en général désireux de procéder à une vérification de la finesse de la mouture, lors du réglage du moulin à café. Or, cette vérification nécessite de recueillir manuellement le café qui vient d'être broyé, avant qu'il ne s'écoule par gravité dans le corps du doseur.

On connaît également une solution alternative, conforme notamment à la gamme d'appareils commercialisée par la société italienne BRASILIA. Dans ce second état de la technique, l'interrupteur est logé dans le couvercle, en étant relié au corps du moulin par l'intermédiaire de fils torsadés. Cet interrupteur coopère avec un mécanisme d'activation, mobile en translation sous l'effet des variations du niveau de café dans le doseur. Cette seconde solution ne permet cependant pas de remédier aux problèmes inhérents au premier état de la technique présenté ci-dessus, en particulier en ce qui concerne la présence des fils électriques susceptibles de gêner l'opérateur.

De façon générale, les solutions antérieures faisant appel à des moyens de détection électromécaniques s'accompagnent de difficultés, en ce qui concerne la conception de l'organe mobile d'actionnement de l'interrupteur.

En effet, cet organe mobile doit être mis en mouvement par l'intermédiaire des variations de niveau du café broyé, qui se présente sous forme d'une poudre. Or, on conçoit que les efforts transmis à l'organe mobile par l'intermédiaire du café broyé sont particulièrement faibles, étant donné le caractère poudreux de ce dernier. Dans ces conditions, les différentes caractéristiques, en particulier géométriques, de cet organe mobile doivent être étudiées avec un très grand soin, afin de garantir notamment un déplacement satisfaisant de cet organe mobile, ainsi qu'une activation fiable de l'interrupteur.

Ceci étant précisé, l'invention vise à remédier aux différents inconvénients de l'état de la technique évoqués ci-dessus.

A cet effet, elle a pour objet un moulin à café, comprenant un corps, des moyens de réception de grains de café non broyés, des moyens de broyage de ces grains, ainsi qu'un doseur qui définit un volume de réception de café broyé, mis en communication avec les moyens de broyage, ce doseur comportant éventuellement des moyens de distribution d'une dose de café et des moyens de tassage de cette dose, ce moulin étant en outre pourvu de moyens de détection du niveau de café broyé dans le doseur, propres à actionner sélectivement les moyens de broyage, ces moyens de détection comportant un organe mobile, susceptible d'être déplacé en fonction des variations du niveau de café broyé dans le doseur, ainsi qu'un organe de détection, propre à détecter la présence de l'organe mobile, caractérisé en ce que l'organe mobile et l'organe de détection sont de nature électromagnétique.

Selon d'autres caractéristiques de l'invention :
- l'organe de détection est un capteur de proximité magnétique, propre à détecter à distance la présence de l'organe mobile ;
- l'organe mobile est un aimant ;
- l'organe mobile est un aimant permanent ;
- l'organe mobile est monté sur un volet pivotant, reçu dans le volume intérieur du doseur ;
- le volet pivotant est articulé sur le couvercle du doseur ;
- l'organe de détection est monté de manière fixe sur le corps du moulin à café, au voisinage du doseur ;
- le doseur comporte des moyens de verrouillage rapide, alors que le corps du moulin à café comprend des moyens de verrouillage complémentaire qui sont propres à coopérer avec ces moyens de verrouillage rapide, en vue d'une fixation amovible du doseur par rapport au corps ;
- l'organe de détection est propre à délivrer un signal électrique en direction des moyens de broyage ;
- le signal électrique est du type « tout ou rien » ;
- le signal électrique est du type progressif, une grandeur caractéristique de ce signal, en particulier sa tension, variant continûment, en service, en fonction de la distance entre l'organe de détection et l'organe mobile ;
- il est également prévu des moyens de visualisation en temps réel du niveau de café broyé dans le doseur, mis en relation avec l'organe de détection.

L'invention sera mieux comprise et d'autres avantages de celle-ci apparaîtront plus clairement à la lumière de la description qui va suivre d'un mode de réalisation d'un moulin à café conforme à son principe, donnée uniquement à titre d'exemple et faite en référence aux dessins annexés, dans lesquels :
- la figure 1 est une vue en perspective, illustrant un moulin à café conforme à l'invention ;
- la figure 1A est une vue en perspective, analogue à la figure 1, illustrant le moulin à café de la figure 1, dont le doseur a été ôté ; et
- les figures 2 et 3 sont des vues en coupe longitudinale, illustrant de façon schématique deux positions différentes des moyens de détection du niveau de café, dont est équipé le moulin conforme à l'invention.

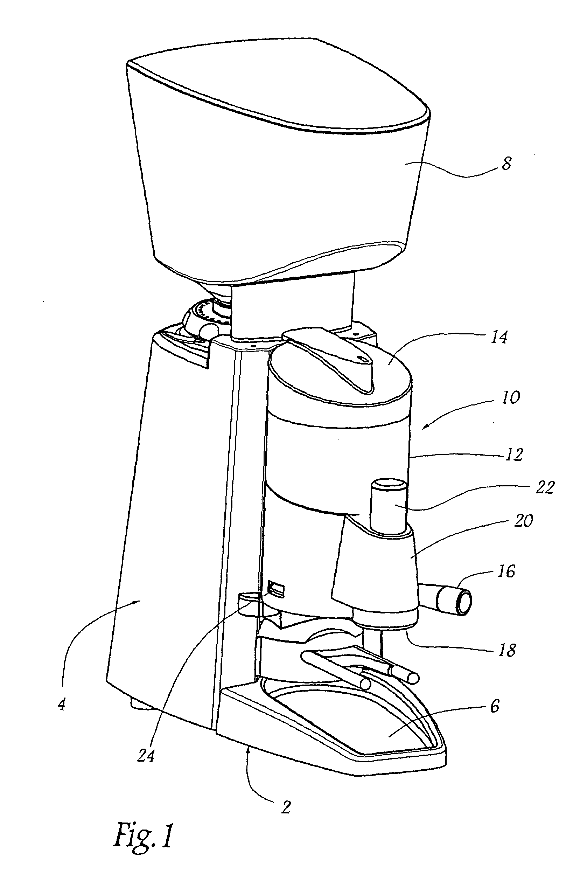

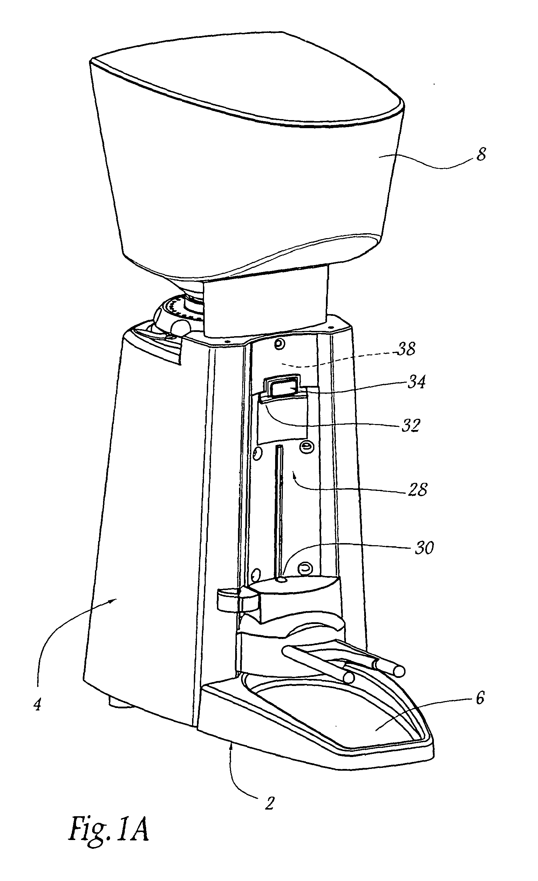

La figure 1 illustre un moulin à café conforme à l'invention, qui comprend une embase 2, à partir de laquelle s'étend un corps principal 4, dans lequel sont logés des moyens moteurs non représentés, de type connu en soi. Cette embase 2 supporte un réceptacle amovible 6, destiné de manière classique à ramasser les chutes de mouture de café.

Ce moulin possède en outre un bac 8, destiné de façon habituelle à la réception de grains de café non broyés. Il est par ailleurs prévu des moyens de broyage connu en soi, tels que des meules, qui ne sont pas représentées sur ces figures 1.

Ce moulin est également équipé d'un doseur de café, désigné dans son ensemble par la référence 10, qui comprend un corps cylindrique 12, définissant un volume de réception de café, fermé à sa partie supérieure par un couvercle 14. Ce doseur 10 est également muni de moyens de soutirage d'une dose de café, de type connu en soi, qui comportent en particulier une poignée 16, coopérant avec des croisillons non représentés, prévus au fond du corps 12.

Un tasseur de café 18, également de type classique, est monté de façon fixe ou mobile sur un nez 20, faisant saillie frontalement par rapport au corps 12. Ce tasseur est propre à être actionné par l'intermédiaire d'un poussoir 22, situé en partie supérieure du nez 20. Il est en outre prévu un compteur 24, permettant de visualiser le nombre de doses soutirées, alors qu'un porte étiquettes non représenté indique au consommateur la nature du café stocké dans le doseur 10.

Dans l'exemple illustré, le doseur 10 est monté de façon amovible par rapport au corps 4 du moulin à café, notamment selon l'enseignement de la demande de brevet français n° 05 09221 déposée le 9 septembre 2005. Le doseur est donc pourvu de moyens de verrouillage rapide, propres à coopérer avec des moyens de verrouillage complémentaire, équipant le corps 4 du moulin à café.

A cet égard, comme le montre notamment la figure 1A, où le doseur est enlevé, le corps 4 est pourvu d'une plaque d'accrochage 28 contre laquelle peut être disposé le doseur. De plus, un doigt escamotable 30 et un crochet 32, qui équipent cette plaque 28, sont propres à coopérer respectivement avec une butée et une rampe, toutes deux non représentées, dont est muni le doseur, en vue du verrouillage amovible de ce dernier sur cette plaque 28.

Enfin, un passage est ménagé dans le corps 4 du moulin à café, de manière à mettre en communication le bac 8 avec un orifice 34, permettant de délivrer du café broyé dans le doseur 10. A cet effet, une ouverture 36, creusée par exemple dans le corps 12 ou le couvercle 14, est mise en communication avec l'orifice précité 34.

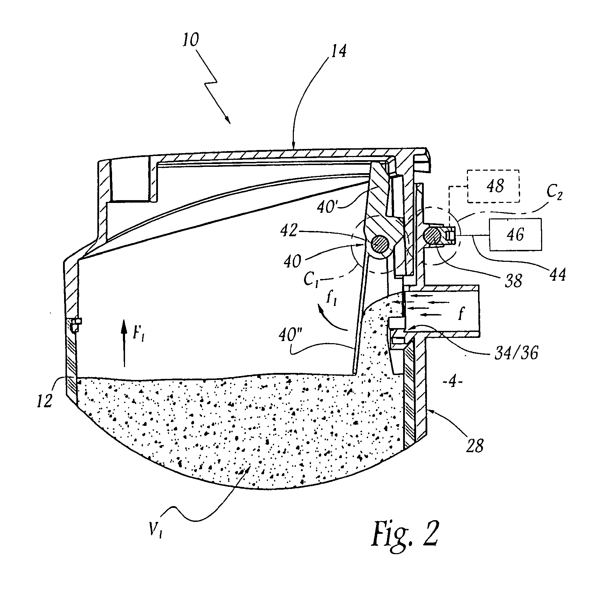

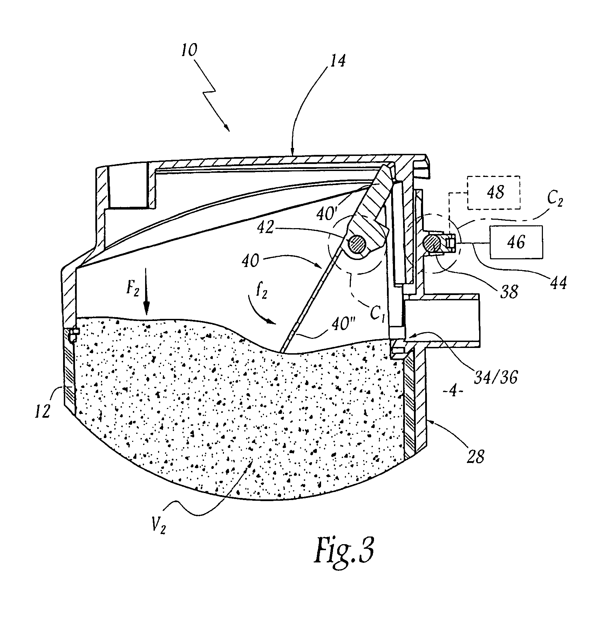

Les figures 2 et 3 illustrent, de façon plus précise, des moyens de détection du niveau de café dont est pourvu le moulin conforme à l'invention.

Sur ces figures, on retrouve à plus grande échelle le corps 4 de ce moulin, en particulier la plaque d'accrochage 28, ainsi que le doseur 10, en particulier son couvercle supérieur 14. On a également représenté l'orifice 34 et l'ouverture 36, respectivement ménagés dans la plaque 28 du corps 4 et dans le doseur 10, de façon à autoriser l'arrivée de café broyé dans ce dernier.

Un capteur de proximité de nature magnétique 38 est monté dans le corps 4 du moulin à café, au-dessus de l'orifice 34. Ce capteur 38, de type connu en soi, appartient par exemple à la gamme de produits commercialisée par la société CELDUC sous la référence PTA 500. La figure 1A illustre l'emplacement de ce capteur 38, qui est noyé dans la plaque d'accrochage 28, tout en n'affleurant pas à la surface de cette dernière.

De plus, dans le volume intérieur du doseur 10, il est prévu un volet pivotant, désigné dans son ensemble par la référence 40. Ce volet 40 est articulé à son extrémité supérieure 40', sur le couvercle 14 du doseur. On notera que ce volet 40 est placé à proximité de la paroi latérale du doseur, qui est elle-même adjacente à la plaque d'accrochage 28.

Dans sa partie intermédiaire, à distance de son point d'articulation sur le couvercle, le volet 40 reçoit un aimant permanent 42, de type connu en soi. A titre purement non limitatif, il peut s'agir d'un aimant cylindrique droit, mais également d'un aimant droit parallélépipédique, ou encore d'un aimant en fer à cheval en forme de U. Cet aimant 42 est propre à coopérer, de manière connue en soi, avec le capteur 38, comme cela sera expliqué plus en détail dans ce qui suit.

Enfin, le volet 40 possède une partie inférieure 40", qui s'étend en regard de l'ouverture 36, à distance de celle-ci, afin de ne pas empêcher la libre admission du café broyé dans le doseur. A titre de variante non représentée, cette partie inférieure 40" peut être inclinée de façon oblique, à l'opposé de cette ouverture 36, à la manière d'un rabat. Enfin, le capteur 38 est mis en relation, via une ligne électrique 44, avec les moyens de broyage, qui sont représentés de façon schématique sur ces figures 2 et 3 et y sont affectés de la référence 46.

L'utilisation du moulin à café décrit ci-dessus, en particulier en ce qui concerne la coopération du capteur 38 et de l'aimant 42, va maintenant être explicitée.

Sur les figures 2 et 3, on a matérialisé, dans un but de clarté, les lignes de champ magnétiques produites par l'aimant 42, au moyen d'un premier cercle C₁. De façon analogue, la zone de détection du capteur 38 a également été matérialisée par un cercle, affecté de la référence C₂. De façon connue en soi, lorsque les lignes de champ entrent dans la zone de détection du capteur, à savoir en d'autres termes que les deux cercles C₁ et C₂ se coupent, l'aimant 42 active ce capteur 38, qui actionne à son tour les moyens de broyage 46.

A la figure 2, le volume V₁ de café broyé dans le doseur 10 présente un niveau relativement bas. Dans ces conditions, le volet 40, qui repose par sa partie inférieure 40" contre la surface de ce volume de café, se trouve au voisinage de la plaque d'accrochage 28. Par conséquent, l'aimant 42 est lui-même suffisamment proche du capteur 38, pour que ses lignes de champ pénètrent dans la zone de détection à savoir que, en d'autres termes, les cercles C₁ et C₂ se coupent.

Dans ces conditions, le capteur 38, qui a donc détecté la présence de l'aimant 42, commande les moyens de broyage 46, par l'intermédiaire de la ligne électrique 44. Ainsi, le café initialement présent dans le bac 8 subit une opération de broyage, puis se trouve admis dans le doseur 10 par l'orifice 34 et l'ouverture 36, selon les flèches f.

On conçoit donc que, au fur et à mesure que du café broyé est admis dans le doseur 10, la surface supérieure du café a tendance à remonter, selon la flèche F₁ à la figure 2. Par conséquent, l'extrémité inférieure du volet 40, qui repose contre cette surface de café, est également repoussée vers le haut, de sorte que le volet pivote, selon la flèche f₁. L'aimant 42 s'éloigne donc progressivement du capteur 38.

Lorsque le volume de café atteint une valeur V₂, illustrée à la figure 3, le volet 40 a pivoté par rapport à sa position de la figure 2, selon une amplitude suffisante pour que le capteur 38 ne détecte plus les lignes de champ de l'aimant 42. En d'autres termes, il n'y a plus intersection entre les cercles C₁ et C₂.

Le capteur 38, qui ne détecte plus la présence de l'aimant 42, n'actionne alors plus les moyens de broyage 46, de sorte que le café admis dans le bac 8 n'est plus soumis à l'opération de broyage. Dans ces conditions, l'admission de café broyé dans le doseur, par l'orifice 34 et l'ouverture 36, se trouve stoppée.

Au fur et à mesure de la consommation par les clients, des doses de café sont soutirées du doseur 10, de sorte que le niveau de café broyé dans ce doseur 10 diminue progressivement, selon la flèche F₂ à la figure 3. Le volet 40, qui vient en butée par gravité contre la surface de café, est alors sujet à un mouvement de pivotement selon la flèche f₂, qui induit un rapprochement mutuel de l'aimant 42 et du volet 38. Ainsi, lorsque le niveau de café dans le doseur 10 a suffisamment diminué, le capteur 38 détecte à nouveau la présence de l'aimant 42, comme décrit ci-dessus, de façon à autoriser à nouveau le broyage de café.

L'invention n'est pas limitée à l'exemple décrit et représenté.

Ainsi, dans cet exemple, le capteur magnétique 38 est de type « tout ou rien », à savoir que le signal électrique qu'il délivre possède uniquement deux états, dont un premier autorise l'actionnement des moyens de broyage 46, et dont l'autre n'autorise pas cet actionnement. A titre de variante, on peut prévoir que ce signal de sortie du capteur est de type progressif.

Ceci signifie alors que la tension de ce signal augmente de façon continue, au fur et à mesure que l'aimant se rapproche de ce capteur. Dans cette optique, on peut prévoir que le capteur 38 est par exemple relié à un écran 48, illustré en traits pointillés, ce qui permet à l'utilisateur de visualiser en temps réel le niveau de café dans le doseur. Il est également possible d'envisager que, en fonction de la valeur de la tension du signal électrique fourni en sortie du capteur magnétique, la vitesse de rotation des moyens de broyage 46 est modifiée.

A titre de variante supplémentaire, il est également possible de prévoir que la zone de réception du capteur magnétique et/ou la zone d'émission de l'aimant sont modifiées au moyen d'éléments réalisés en un matériau spécifique, ayant notamment des propriétés magnétiques, ou bien amagnétiques. Ces différentes zones peuvent ainsi, soit être limitées, soit être étendues.

A titre d'exemple, il est tout d'abord possible de limiter la zone d'action de l'aimant en intercalant de façon appropriée un matériau amagnétique, notamment pour éviter qu'une pièce posée sur le couvercle du doseur ne fausse la détection. La zone de réception du capteur magnétique peut également être limitée, par exemple pour éviter que le champ magnétique créé par le moteur du moulin à café n'active accidentellement ce capteur. Il est également possible d'augmenter en revanche la zone d'action de l'aimant, par exemple en plaçant un barreau conducteur entre ce dernier et le capteur.

Dans l'exemple décrit et représenté, le volet pivotant 40 est ramené en position, contre la surface du café broyé, par l'intermédiaire de son propre poids. A titre de variante, il est possible de prévoir un système permettant d'assister le retour en position de ce volet, par exemple de façon mécanique, au moyen d'un ressort, ou encore de façon magnétique, par l'intermédiaire d'un aimant de rappel.

Dans le présent exemple, l'aimant 42 est monté sur un volet pivotant. Cependant, un tel volet peut également présenter un mouvement de translation, ou encore un mouvement combiné de translation et de rotation.

L'invention permet de réaliser les objectifs précédemment mentionnés.

Ainsi, grâce à l'invention, les moyens de détection de niveau, de nature électromagnétique, sont à même de fonctionner sans faire intervenir de contact entre le capteur et l'aimant, ce qui est à comparer avec les organes électromécaniques de l'état de la technique. Dans ces conditions, l'invention permet de réduire les problèmes de transmission de mouvement, ainsi que de supprimer les frottements, puisque le capteur peut être activé sans effort mécanique.

Par ailleurs, grâce à l'invention, il est possible de conférer un caractère amovible au doseur, par rapport au corps du moulin à café. En effet, dans l'invention, le déplacement du doseur par rapport au corps n'est pas limité par la présence d'organes électriques, comme dans l'état de la technique. Dans ces conditions, l'opération permettant de démonter le doseur par rapport au corps est particulièrement simple, puisqu'elle ne nécessite pas de faire appel à un prestataire qualifié dans le domaine électrique. Ceci est d'une importance notable étant donné que, comme on l'a vu ci-dessus, le doseur nécessite des démontages fréquents, par exemple en vue de son nettoyage.

De plus, l'invention est avantageuse en termes de sécurité, puisque le capteur magnétique peut être noyé dans le corps du moulin, de sorte qu'il n'est pas accessible et se trouve en dehors des zones de nettoyage et de démontage.

Prévoir l'aimant sur le couvercle est également avantageux. En effet, dans ce cas, cet aimant est facilement amovible, de sorte qu'il autorise un accès commode à l'utilisateur pour procéder au palpage manuel de la mouture. De plus, cette mesure est avantageuse en termes de sécurité puisque, si le couvercle est ôté du doseur, l'aimant ne peut activer le capteur, de sorte que les moyens de broyage sont nécessairement à l'arrêt et, par conséquent, tout risque de blessure est évité. En revanche, si le couvercle se trouve sur le doseur, l'opérateur ne peut alors plus introduire ses doigts en direction des moyens de broyage, ce qui garantit également une grande sécurité.

On notera également qu'il est avantageux de prévoir un aimant de type permanent. En effet, ceci permet de s'affranchir de la présence de fils électriques.

## Revendications

1. Moulin à café, comprenant un corps (4), des moyens (8) de réception de grains de café non broyés, des moyens (46) de broyage de ces grains, ainsi qu'un doseur (10) qui définit un volume de réception de café broyé, mis en communication avec les moyens de broyage, ce doseur comportant éventuellement des moyens (16) de distribution d'une dose de café et des moyens (18) de tassage de cette dose, ce moulin étant en outre pourvu de moyens (38, 42) de détection du niveau de café broyé dans le doseur, propres à actionner sélectivement les moyens de broyage, ces moyens de détection comportant un organe mobile (42), susceptible d'être déplacé en fonction des variations du niveau de café broyé dans le doseur, ainsi qu'un organe de détection (38), propre à détecter la présence de l'organe mobile, **caractérisé en ce que** l'organe mobile (42) et l'organe de détection (38) sont de nature électromagnétique.

2. Moulin à café selon la revendication 1, **caractérisé en ce que** l'organe de détection est un capteur de proximité magnétique (38), propre à détecter à distance la présence de l'organe mobile (42).

3. Moulin à café selon la revendication 1 ou 2, **caractérisé en ce que** l'organe mobile est un aimant (42).

4. Moulin à café selon la revendication 3, **caractérisé en ce que** l'organe mobile est un aimant permanent (42).

5. Moulin à café selon l'une quelconque des revendications précédentes, **caractérisé en ce que** l'organe mobile (42) est monté sur un volet pivotant (40), reçu dans le volume intérieur du doseur (10).

6. Moulin à café selon la revendication 5, **caractérisé en ce que** le volet pivotant est articulé sur le couvercle (14) du doseur (10).

7. Moulin à café selon l'une quelconque des revendications précédentes, **caractérisé en ce que** l'organe de détection (38) est monté de manière fixe sur le corps (4) du moulin à café, au voisinage du doseur (10).

8. Moulin à café selon l'une quelconque des revendications précédentes, **caractérisé en ce que** le doseur (10) comporte des moyens de verrouillage rapide, alors que le corps (4) du moulin à café comprend des moyens de verrouillage complémentaire (30, 32) qui sont propres à coopérer avec ces moyens de verrouillage rapide, en vue d'une fixation amovible du doseur par rapport au corps.

9. Moulin à café selon l'une quelconque des revendications précédentes, **caractérisé en ce que** l'organe de détection (38) est propre à délivrer un signal électrique en direction des moyens de broyage.

10. Moulin à café selon la revendication 9, **caractérisé en ce que** le signal électrique est du type « tout ou rien ».

11. Moulin à café selon la revendication 9, **caractérisé en ce que** le signal électrique est du type progressif, une grandeur caractéristique de ce signal, en particulier sa tension, variant continûment, en service, en fonction de la distance entre l'organe de détection (38) et l'organe mobile (42).

12. Moulin à café selon la revendication 11, **caractérisé en ce qu**'il est également prévu des moyens (48) de visualisation en temps réel du niveau de café broyé dans le doseur (10), mis en relation avec l'organe de détection (38).

## Claims

1. Coffee mill comprising a casing (4), means (8) for holding unground coffee beans, means (46) for grinding these beans, and a metering apparatus (10) which defines a ground coffee receiving volume communicating with the grinding means, this metering apparatus optionally comprising means (16) for dispensing a serving of coffee and means (18) for compressing this serving, the mill also being provided with means (38, 42) which detect the level of ground coffee in the metering apparatus and are designed to selectively operate the grinding means, these detection means comprising a moving part (42) capable of being moved on the basis of variations in the level of ground coffee in the metering apparatus, and a detection member (38) for detecting the presence of the moving part, said mill being **characterized in that** the moving part (42) and the detection member (38) are of electromagnetic type.

2. Coffee mill according to Claim 1, **characterized in that** the detection member is a magnetic proximity sensor (38) for remotely detecting the presence of the moving part (42).

3. Coffee mill according to Claim 1 or 2, **characterized in that** the moving part is a magnet (42).

4. Coffee mill according to Claim 3, **characterized in that** the moving part is a permanent magnet (42).

5. Coffee mill according to any one of the preceding claims, **characterized in that** the moving part (42) is mounted on a pivoting flat flap (40) received in the internal volume of the metering apparatus (10).

6. Coffee mill according to Claim 5, **characterized in that** the pivoting flap is hinged to the cover (14) of the metering apparatus (10).

7. Coffee mill according to any one of the preceding claims, **characterized in that** the detection member (38) is mounted in a fixed manner on the casing (4) of the coffee mill, close to the metering apparatus (10).

8. Coffee mill according to any one of the preceding claims, **characterized in that** the metering apparatus (10) comprises quick locking means, while the casing (4) of the coffee mill comprises complementary locking means (30, 32) capable of engaging with these quick locking means for the removable fixing of the metering apparatus relative to the body.

9. Coffee mill according to any one of the preceding claims, **characterized in that** the detection member (38) is capable of sending an electrical signal to the grinding means.

10. Coffee mill according to Claim 9, **characterized in that** the electrical signal is of the "all or nothing" type.

11. Coffee mill according Claim 9, **characterized in that** the electrical signal is of the progressive type, a characteristic parameter of this signal, especially its voltage, varying continuously, in service, as a function of the distance between the detection member (38) and the moving part (42).

12. Coffee mill according to Claim 11, **characterized in that** it also has means (48), connected to the detection member (38), for displaying in real time the level of ground coffee in the metering apparatus (10).

## Patentansprüche

1. Kaffeemühle, mit einem Körper (4), Mitteln (8) für die Aufnahme von nicht gemahlenen Kaffeebohnen, Mitteln (46) zum Mahlen dieser Bohnen sowie einer Dosiereinrichtung (10), die ein Aufnahmevolumen für gemahlenen Kaffee definiert und mit den Mahlmitteln in Verbindung steht, wobei diese Dosiereinrichtung gebenenfalls Mittel (16) zum Verteilen einer Kaffeemenge und Mittel (18) zum Verdichten dieser Menge enthält, wobei diese Mühle außerdem mit Mitteln (38, 42) zum Erfassen des Niveaus von gemahlenem Kaffee in der Dosiereinrichtung versehen ist, die die Mahlmittel wahlweise betätigen können, wobei diese Erfassungsmittel ein bewegliches Organ (42), das in Abhängigkeit von Veränderungen des Niveaus von gemahlenem Kaffee in der Dosiereinrichtung verlagert werden kann, und ein Erfassungsorgan (38), das das Vorhandensein des beweglichen Organs erfassen kann, enthalten, **dadurch gekennzeichnet, dass** das bewegliche Organ (42) und das Erfassungsorgan (38) vom elektromagnetischen Typ sind.

2. Kaffeemühle nach Anspruch 1, **dadurch gekennzeichnet, dass** das Erfassungsorgan ein magnetischer Abstandssensor (38) ist, der das Vorhandensein des beweglichen Organs (42) aus der Ferne erfassen kann.

3. Kaffeemühle nach Anspruch 1 oder 2, **dadurch gekennzeichnet, dass** das bewegliche Organ ein Magnet (42) ist.

4. Kaffeemühle nach Anspruch 3, **dadurch gekennzeichnet, dass** das bewegliche Organ ein Permanentmagnet (42) ist.

5. Kaffeemühle nach einem der vorhergehenden Ansprüche, **dadurch gekennzeichnet, dass** das bewegliche Organ (42) an einer schwenkbaren Klappe (40) angebracht ist, die in dem Innenvolumen der Dosiereinrichtung (10) aufgenommen ist.

6. Kaffeemühle nach Anspruch 5, **dadurch gekennzeichnet, dass** die schwenkbare Klappe an dem Deckel (14) der Dosiereinrichtung (10) angelenkt ist.

7. Kaffeemühle nach einem der vorhergehenden Ansprüche, **dadurch gekennzeichnet, dass** das Erfassungsorgan (38) an dem Körper (4) der Kaffeemühle in der Umgebung der Dosiereinrichtung (10) fest angebracht ist.

8. Kaffeemühle nach einem der vorhergehenden Ansprüche, **dadurch gekennzeichnet, dass** die Dosiereinrichtung (10) Schnellverriegelungsmittel enthält, während der Körper (4) der Kaffeemühle komplementäre Verriegelungsmittel (30, 32) enthält, die mit diesen Schnellverriegelungsmitteln zusammenwirken können, um eine lösbare Befestigung der Dosiereinrichtung an dem Körper zu schaffen.

9. Kaffeemühle nach einem der vorhergehenden Ansprüche, **dadurch gekennzeichnet, dass** das Erfassungsorgan (38) ein elektrisches Signal zu den Mahlmitteln liefern kann.

10. Kaffeemühle nach Anspruch 9, **dadurch gekennzeichnet, dass** das elektrische Signal vom Typ "EIN/AUS" ist.

11. Kaffeemühle nach Anspruch 9, **dadurch gekennzeichnet, dass** das elektrische Signal vom progressiven Typ ist, wobei sich eine charakteristische Größe des Signals, insbesondere seine Spannung, im Betrieb in Abhängigkeit vom Abstand zwischen dem Erfassungsorgan (38) und dem beweglichen Organ (42) stetig verändert.

12. Kaffeemühle nach Anspruch 11, **dadurch gekennzeichnet, dass** außerdem Mittel (48) vorgesehen sind, um in Echtzeit das Niveau von gemahlenem Kaffee in der Dosiereinrichtung (10) in Bezug auf das Erfassungsorgan (38) anzuzeigen.
